# EUROPÄISCHE PATENTSCHRIFT

(11) **EP 1 623 791 B1**
(45) Veröffentlichungstag und Bekanntmachung des Hinweises auf die Patenterteilung: **14.10.2009**
(21) Anmeldenummer: 05076782.1
(22) Anmeldetag: 27.07.2005
(51) Int. Cl.: B23K 35/14, B23K 35/26

(54) **Verfahren zum Raffinieren und homogenen Verteilen von Legierungspartnern sowie Entfernen von unerwünschten Reaktionspartnern und Schlacken in bzw. aus Weichloten beim Herstellen von Feinstlotpulver**
Procédé de raffinage et de répartition homogène de composants d'alliage, ainsi que d'élimination de produits de réaction indésirés et de scories dans un alliage de soudure tendre, lors de la production de poudre de soudure fine.
Process for refining and evenly distributing alloying components, as well as eliminating unwanted reaction products and slag in respectively from a solder alloy, during the production of fine solder powder.

(30) Priorität: 03.08.2004 DE 102004038280
(43) Veröffentlichungstag der Anmeldung: 08.02.2006
(73) Patentinhaber: W.C. Heraeus GmbH, 63450 Hanau (DE)
(72) Erfinder: Protsch, Walter, Dipl.-Ing., 14513 Teltow (DE); Schulze, Jürgen, Dipl.-Chem, 14480 Potsdam (DE)
(74) Vertreter: COHAUSZ DAWIDOWICZ HANNIG & SOZIEN

(56) Entgegenhaltungen:
- DE-C1- 19 830 057
- US-A1- 2003 177 865

## Beschreibung

Die Erfindung betrifft ein Verfahren zum Raffinieren und homogenen Verteilen von Legierungspartnern sowie Entfernen unerwünschter Reaktionsprodukte wie Oxide und/oder Schlacken in bzw. aus Weichloten beim Herstellen von Feinstlotpulver, bei dem die Lotlegierung in einem hochtemperaturbeständigen pflanzlichen und/oder tierischen Öl aufgeschmolzen, die Schmelze in eine weitere Ölvorlage mit einer Temperatur von mindestens 20 °C oberhalb der Liquidustemperatur verbracht, dort gerührt und einer mehrfachen Scherbehandlung durch Rotoren und Statoren zum Bilden einer aus Lotkugeln und Öl bestehenden Dispersion unterworfen wird, von der die Lotkugeln mittels anschließender Sedimentation abgeteilt werden.

Aus der DE 101 61 826 A1 ist ein bleifreies Weichlot auf der Basis einer Zinn-Silber-Kupfer-Lotlegierung bekannt, bei der einer Basislegierung mit 5 bis 20 Gew.-% Silber, 0,8 bis 1,2 Gew.-% Kupfer, Rest Zinn und übliche Verunreinigungen stets 0,8 bis 1,2 Gew.-% Indium und 0,01 bis 0,2 Gew.-% eines Elementes der Lanthanoide wie beispielsweise Lanthan oder Neodym zulegiert sind.
Dieses bekannte bleifreie Weichlot verhält sich beginnend ab 214°C eutektisch, unterdrückt die Ausbildung von großen Zinndentriden, gewährleistet nach dem Aufschmelzen eine glatte und homogene Oberfläche und hat auch gute physikalische und chemische Eigenschaften wie beispielsweise eine sehr gute Benetzungsfähigkeit, hohe Wechselfestigkeit, eine gute Korrosionsbeständigkeit, Plastizität und Zähigkeit und auch einen geringen elektrischen Widerstand.

Die Erschmelzung der Legierung und auch die Verarbeitung dieser bekannten Legierung zu Feinstlotkugeln führt jedoch insbesondere durch die sehr hohe Reaktivität der Legierungsbestandteile Lanthan oder Neodym zu ernsten Problemen, die sich in einer Agglomeration von Reaktionsprodukten des Neodyms oder Lanthans in den Lotkugeln äußern. Neodym reagiert äußerst heftig, beispielsweise auch mit gebundenem Restsauerstoff in der Schmelze, der in Spuren immer vorhanden ist, und bildet Oxide, die in den Lotkugeln außerdem zu größeren Gebilden agglomerieren. Diese Oxide akkumulieren verhältnismäßig viel Neodym, das dann in der Matrix bzw. den Korngrenzen fehlt. Des weiteren können intermetallische Phasen der Zusammensetzung Ag₃Sn und Cu₆Sn₅ auftreten.
Die Verarbeitungsfähigkeit und die elektrischen Eigenschaften derartiger Weichlote werden durch diese harten Einschlüsse nachhaltig eingeschränkt.

Aus der DE 198 30 057 C2 ist auch ein Verfahren zum drucklosen Herstellen von Weichlotpulver in einem Kornbandspektrum von 1 bis 100 µm bekannt, bei dem das metallische Lot in einem hochtemperaturbeständigen pflanzlichen oder tierischen Öl aufgeschmolzen, anschließend gerührt und in einer mehrfachen Scherbehandlung durch Rotoren und Statoren zu Lotkugeln definierter Größe dispergiert wird.

Nach der US 5 411 602 A wird Lot aufgeschmolzen und das aufgeschmolzene Lot mittels Inertgas in Tropfen zerteilt.
Trotz der Inertgasatmosphäre kann nicht ausgeschlossen werden, dass die reaktiven Metalle wie Neodym oder Lanthan Reaktionen mit gebundenem Sauerstoff eingehen, so dass die Lotlegierung mehr oder weniger Oxide dieser Metalle enthalten und die Dotierung beispielsweise mit Neodym oder Lanthan mehr oder weniger verloren geht.

In der US 6 231 691 B1 ist eine bleifreie Lotlegierung auf Zinnbasis mit 4,7 Gew.-% Silber, 1,7 Gew.-% Kupfer und 0,15 Gew.-% Nickel beschrieben. Diese bekannte Legierung neigt zur verstärkten Bildung von intermetallischen Phasen des Cu₃Sn und/oder Cu₆Sn₅-Typs, die sehr negative Auswirkungen auf die mechanisch/physikalischen Eigenschaften der Lötverbindung haben.

Bei diesem Stand der Technik liegt der Erfindung die Aufgabe zugrunde, die Reaktion der reaktiver Legierungspartner mit Sauerstoff, Stickstoff und anderen Reaktionspartnern bei der Verarbeitung von bleifreien Weichlotlegierungen zu Feinstlotpulvern sicher zu verhindern, eine Agglomeration der Reaktionsprodukte in der Matrix der Lotkugeln zu vermeiden und die Legierungspartner feindispers und homogen in der Matrix der Lotkugeln zu verteilen.

Diese Aufgabe wird durch ein Verfahren der eingangs genannten Gattung mit den Merkmalen des Anspruches 1 gelöst.
Vorteilhafte Ausgestaltungen des Verfahrens sind den Unteransprüchen entnehmbar.

Die erfindungsgemäße Lösung zeichnet sich dadurch aus, dass das zum Aufschmelzen des Lots eingesetzte Öl sowohl ein inertes Medium gegenüber den Legierungspartnern, beispielsweise Lanthan oder Neodym, in Weichlotlegierungen als auch ein Trennmedium zum Herauslösen der in der Lotlegierung enthaltenen Reaktionsprodukte wie Oxide und/oder Schlacken darstellt.

Das erfindungsgemäße Verfahren gestattet es ferner, die Legierungspartner in der Lotlegierung zu raffinieren und diese homogen sowie feindispers in der Legierung zu verteilen. Die komplexe Problematik dieser Vorgänge soll dadurch verdeutlicht werden, dass die abgescherten Lotkugeln selbst Dimensionen aufweisen, die dem Strukturaufbau der Elemente sehr nahe kommen.
Durch das Herauslösen der mit dem Erschmelzungsprozeß oder der Verarbeitung dieser Lote zur Herstellung von Feinstlotpulvern gebildeten Oxideinschlüsse der Lanthanoide oder anderer reaktiver Metalle und der nachteiligen Schlacken gelingt die Bereitstellung eines Feinstlotpulvers, das alle Ansprüche für die Mikrokontaktierung erfüllt.

Weitere Vorteile und Einzelheiten ergeben sich aus der nachfolgenden Beschreibung unter Bezugnahme auf die beigefügten Zeichnungen.

Die Erfindung soll nachstehend an einem Ausführungsbeispiel näher erläutert werden.

Es zeigen:
- Fig. 1: eine REM-Aufnahme (Mapping) einer bleifreien Lotlegierung mit Neodymoxid-Einschlüssen nach dem Stand der Technik,
- Fig. 2: eine REM-Aufnahme (Mapping) mit Sauerstoff-Verteilung gemäß Fig. 1,
- Fig. 3a und b: eine REM-Aufnahme einer bleifreien Lotlegierung mit intermetallischen Phasen der Zusammensetzung Ag₃Sn und Cu₆Sn₅ gemäß Fig. 1,
- Fig. 4 a bis f: eine REM-Aufnahme einer nach der Erfindung erzeugten Lotkugel mit Verteilung der Legierungsbestandteile (Silber, Zinn, Kupfer, Indium, Neodym und Sauerstoff) in der Lotkugel.

Mit dem erfindungsgemäßen Verfahren sollen Feinstlotkugeln der bleifreien Legierung SnAg5Cu1In1Nd0,2 mit einem Durchmesser von 5 bis 15 µm (Typ 6) hergestellt werden.

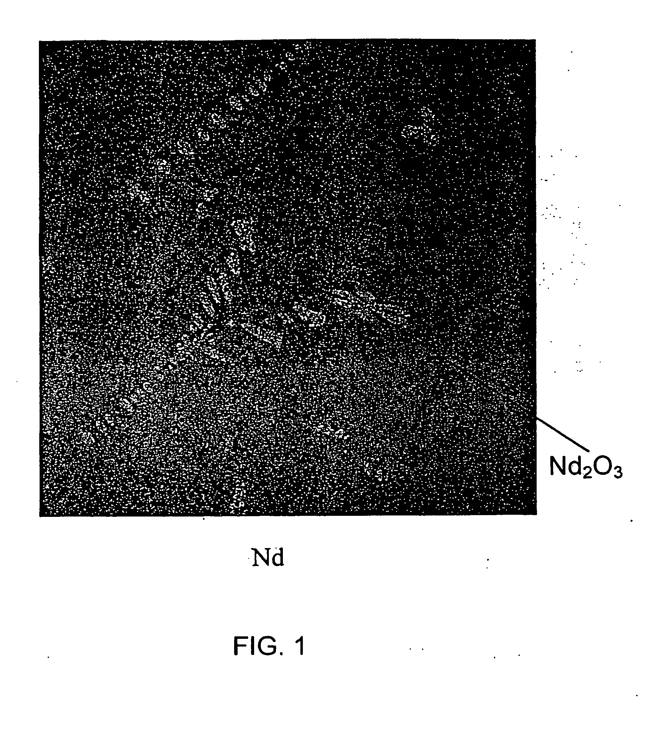

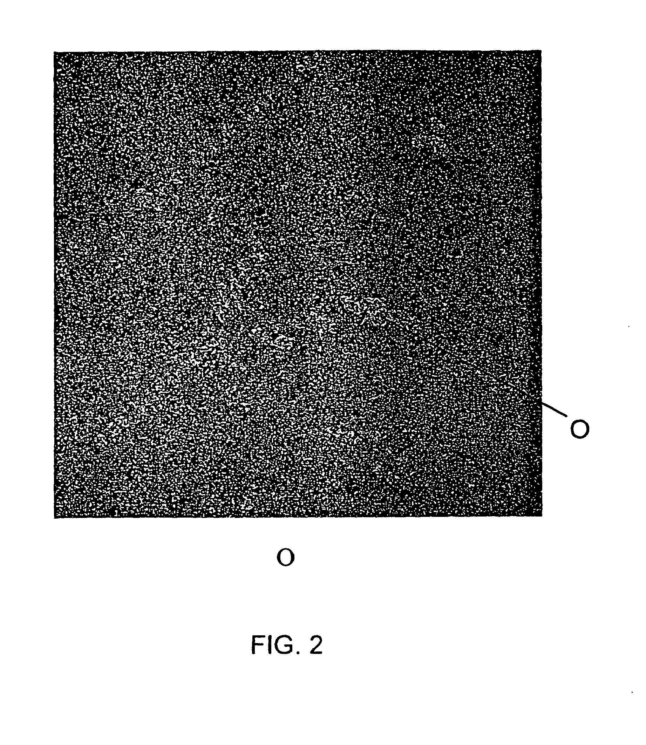

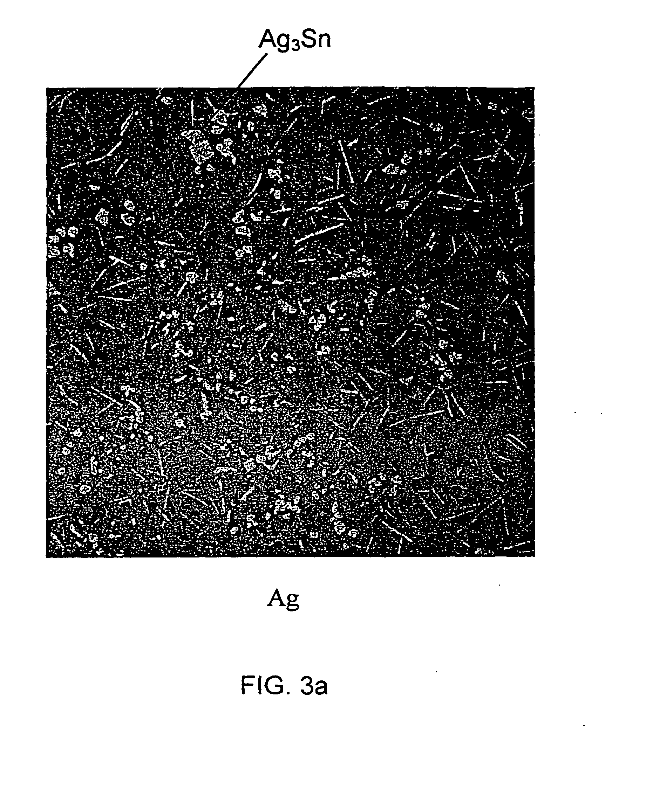

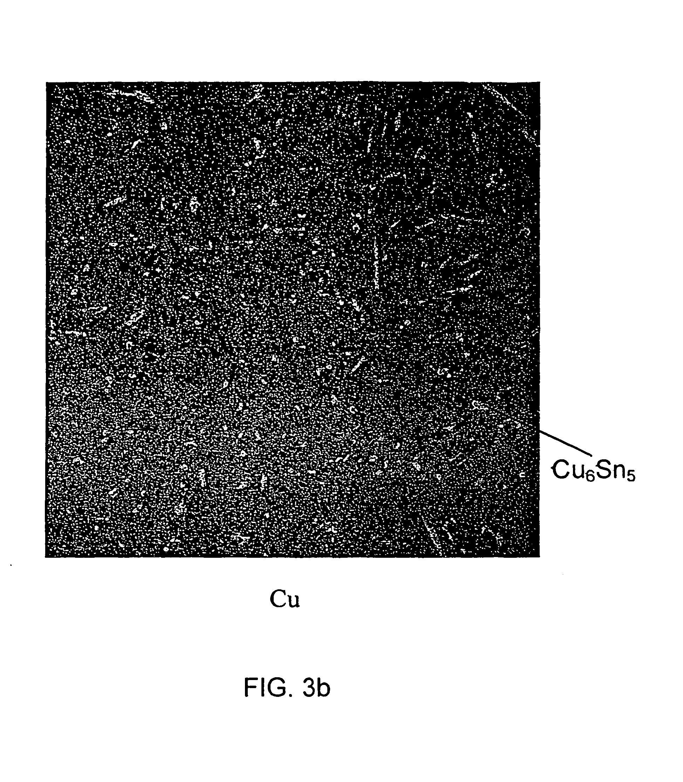

Die Fig. 1, 2, 3a und 3 b zeigen den Ausgangszustand der bleifreien Lotlegierung nach dem Stand der Technik, aus der sehr deutlich die Einschlüsse aus Neodymoxid (Fig. 1) und die intermetallischen Phasen Ag₃Sn und Cu₆Sn₅ (Fig. 3a und 3b) zu erkennen sind. In der Fig. 2 ist die Verteilung des Sauerstoffs in der Legierung gezeigt, die den Beweis erbringt, dass die Einschlüsse Oxide (Nd₂O₃) sind.
Die Oxid-Einschlüsse haben einen Schmelzpunkt von 2.272 °C, eine Dichte von 7,29 g/cm³ und sind hart, nicht duktil und spröde. Das Oxid akkumuliert außerdem verhältnismäßig viel elementares Neodym, so dass dieses an den Korngrenzen fehlt, wodurch die Temperaturwechselfestigkeit der Lötstellen durch Risse und schnelle Rissfortpflanzung negativ beeinflusst wird.
Die Einschlüsse führen dann in der Lötverbindung zu Unterbrechungen und zu Unregelmäßigkeiten in den elektrischen Eigenschaften, so dass ein solches Lot für die Mikrokontaktierung nicht mehr besonders gut geeignet ist.

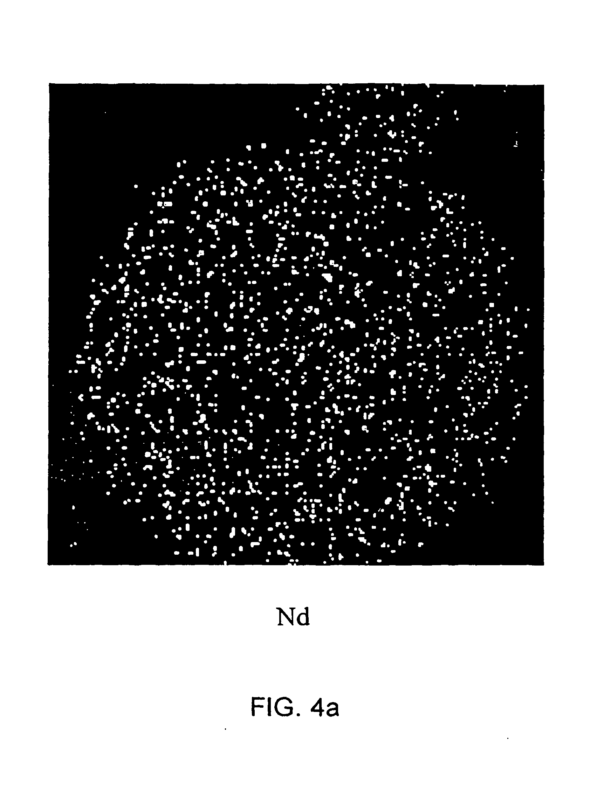

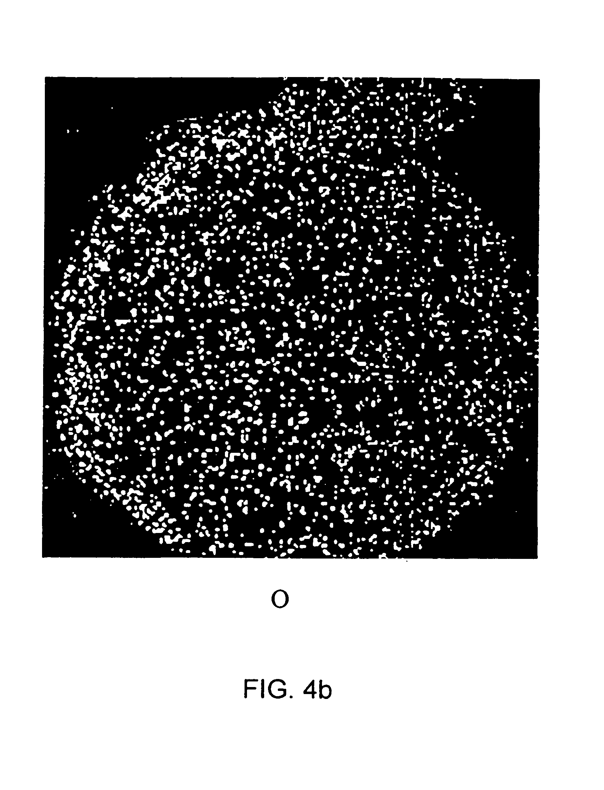

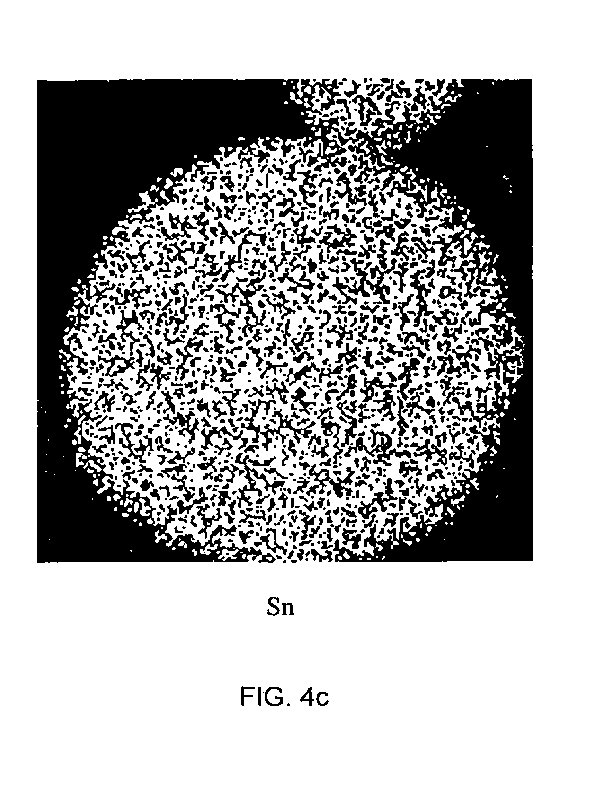

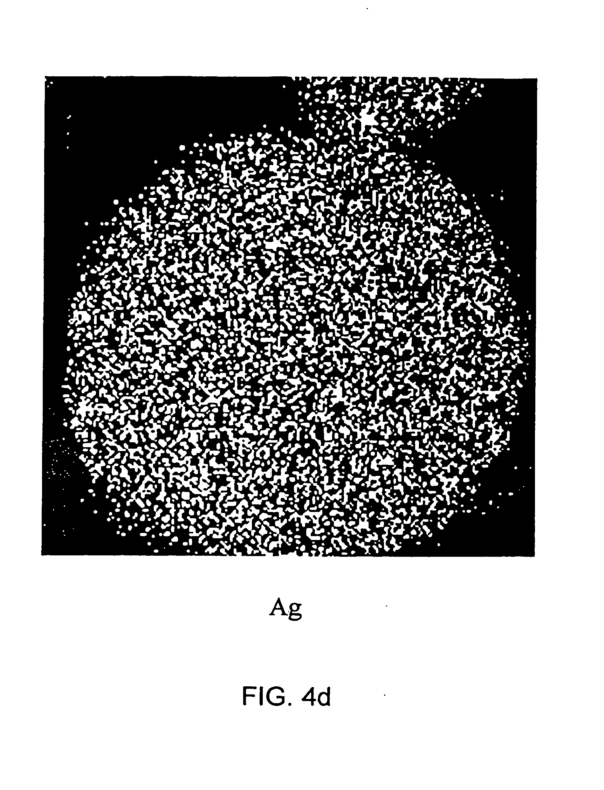

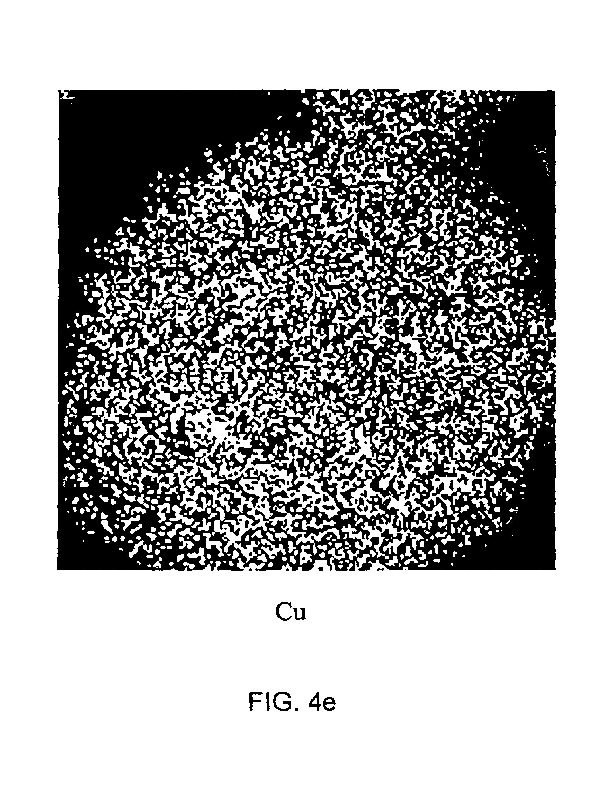

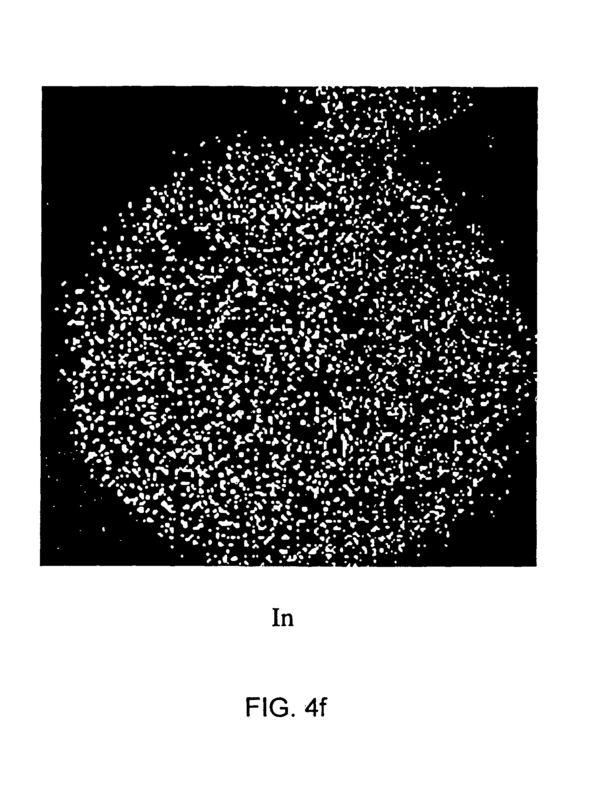

Die Fig. 4a bis 4f zeigen die Verteilung der Legierungspartner Zinn, Silber, Kupfer, Indium und Neodym einer bleifreien Weichlotlegierung in einer Lotkugel, die nach dem erfindungsgemäßen Verfahren erzeugt wurde.

Hierzu werden 12 kg der bleifreien Lotlegierung SnAg5Cu1In1Nd0,2 als Massel oder Stange in einem mit 3 Liter Rizinusöl gefüllten Schmelzbehälter gegeben und das Öl zum Aufschmelzen der Lotlegierung auf mindestens 20 °C oberhalb der Liquidustemperatur der Lotlegierung, beispielsweise 240 °C, erhitzt. Das Öl verhält sich gegenüber dem Lot anaerob und schließt die Lotschmelze vollkommen gegenüber der Atmosphäre ab. Aus der Lotschmelze werden die Neodymoxide beim Aufschmelzen freigesetzt. Diese treiben infolge ihrer gegenüber der Schmelze geringeren Dichte in dem Öl auf und reichern sich dort innerhalb von 2 Stunden bis zum Erreichen der Prozeßtemperatur der Anlage an. Das Öl fungiert somit nicht nur als Wärmeträger und Dispergiermittel, sondern auch als Trennmedium.
Die verbleibende Lotschmelze wird durch ein Düsensystem in eine weitere Ölvorlage aus Rizinusöl abgelassen und somit von den ausgeschiedenen Verunreinigungen getrennt. Die Temperatur dieses Öls liegt ebenfalls mindestens 20 °C über der Liquidustemperatur der Lotlegierung. Die Lotschmelze gelangt in einen Dispergierreaktor, in dem die Lotschmelze einer Scherbehandlung durch mit einer Umfangsgeschwindigkeit von 23 m/s an Statoren vorbeilaufenden Rotoren unterworfen wird, so dass die Lotschmelze in kleine Lotkugeln geteilt wird, wodurch eine Oberflächenvergrößerung der Schmelze auf das 2.500fache erfolgt und bisher eingeschlossene Verunreinigungen freigesetzt werden. Die abgeteilten Lotkugeln werden zusammen mit dem Öl mehrfach, d.h. mindestens 20mal im Kreislauf durch den Dispergierreaktor gefahren, bis die gewünschte Durchmesserverteilung der Lotkugeln erreicht wird und zugleich restliche Verunreinigungen aus der Lotschmelze ausgetrieben werden. Beim Dispergieren des Lots wird mit einem Volumenverhältnis von Lot zum Öl von 1:20 bis 1:50 und einer Dispergierzeit von 16 Minuten gearbeitet.
Nach Ablauf dieser Zeit wird das disperse Lotkugel-Öl-Gemisch in einen Absetzbehälter gegeben, wo die abgescherten Lotkugeln im Öl erstarren und sedimentieren. Die beim Dispergieren ausgeschiedenen Verunreinigungen sammeln sich infolge ihrer geringeren Dichte gegenüber dem Lot im Öl an. Öl und Verunreinigungen werden abgesaugt und damit von den Lotkugeln getrennt.

Die Fig. 4a zeigt die Verteilung des Neodyms in der Matrix einer solch nach dem erfindungsgemäßen Verfahren erzeugten Lotkugel. Man erkennt in Fig. 4a, dass die Verteilung des Neodyms regelmäßig und regulär ist. Grobe Einschlüsse aus Neodymoxid oder Schlacken sind nicht mehr vorhanden. Intermetallische Phasen werden verkleinert und homogen verteilt. Ebenso sind alle anderen Legierungspartner homogen im Volumen des Kugel verteilt, so dass optimale Löteigenschaften erreicht werden können.

## Patentansprüche

1. Verfahren, zum Raffinieren und homogenen Verteilen von Legierungspartnern sowie Entfernen unerwünschter Reaktionsprodukte wie Oxide und/oder Schlacken aus bleifreien Weichloten beim Herstellen von Feinstlotpulver, umfassend folgende Schritte:
a) Aufschmelzen der Lotlegierung in einem hochtemperaturbeständigen pflanzlichen und/oder tierischen Öl, wobei das Öl die Schmelze von den Reaktionsprodukten und/oder Schlacken trennt sowie letztere beim Aufschmelzen freisetzt,
b) Auftreiben und Anreichern der freigesetzten Reaktionsprodukte und/oder Schlacken im Öl infolge von Dichteunterschieden zwischen Schmelze und Reaktionsprodukte und/oder Schlacken,
c) Abtrennen des Öls mit den Reaktionsprodukten und/oder Schlacken durch Ablassen der Schmelze in eine weitere Ölvorlage mit einer Temperatur von mindestens 20 °C oberhalb der Liquidustemperatur, Rühren und eine mehrfache Scherbehandlung von Schmelze und Öl durch Rotoren und Statoren zum Bilden einer aus Lotkugeln und Öl bestehenden Dispersion und Absaugen des Öls mit den Reaktionsprodukten und/oder Schlacken,
d) Austreiben der im Inneren der Lotschmelze noch vorhandenen Reaktionsprodukte und/oder Schlacken durch Vergrößern der Oberfläche der Lotschmelze beim Scheren mit einer Umfangsgeschwindigkeit der Rotoren von 15,0 bis 25 m/s unter Einhaltung eines Volumenverhältnisses zwischen Schmelze und Öl von 1:20 bis 1:50,
e) Anreichern der beim Scheren aus dem Inneren der Lotschmelze ausgetriebenen Reaktionsprodukte und/oder Schlacken im Öl durch die Dichteunterschiede zwischen Reaktionsprodukte und/oder Schlacken und Öl,
f) turbulentes Vermischen der verbleibenden Lotschmelze und des Öls während eines Umwälzzeitraumes von 10 bis 30 Minuten zum homogenen Verteilen der Legierungspartner im Lot,
g) Abtrennen der angereicherten Reaktionsprodukte und/oder Schlacken zusammen mit dem Öl nach Sedimentation der Lotkugeln.

2. Verfahren nach Anspruch 1, **dadurch gekennzeichnet, dass** die bleifreien Weichlote Sn-Basis-Weichlote sind, die aus Sn, Ag, Cu, In und Lanthanoide sowie Reaktionsprodukte der Lanthanoide bestehen.

3. Verfahren nach Anspruch 1 oder 2, **dadurch gekennzeichnet, dass** die bleifreien Weichlote Sn-Basis-Weichlote sind, die aus Sn, Ag, In und Nd sowie Reaktionsprodukte in Form von Neodymoxid und/oder intermetallischen Phasen des Ag₃Sn- und Cu₆Sn₅-Typs bestehen.

4. Verfahren nach Anspruch 1, **dadurch gekennzeichnet, dass** die bleifreien Weichlote Sn-Basis-Weichlote sind, die aus Sn, Ag, Cu und Ni sowie Reaktionsprodukte in Form von intermetallischen Phasen des Cu₃Sn- und/oder Cu₆Sn₅-Typs bestehen.

5. Verfahren nach Anspruch 1, **dadurch gekennzeichnet, dass** die bleifreien Weichlote Sn-Basis-Weichlote sind, die aus Sn und Ag sowie Reaktionsprodukte in Form von intermetallischen Phasen des Ag₃Sn-Typs bestehen.

6. Verfahren nach Anspruch 1, **dadurch gekennzeichnet, dass** die bleifreien Weichlote Sn-Basis-Weichlote sind, die aus Sn und Cu sowie Reaktionsprodukte in Form von intermetallischen Phasen des Cu₃Sn- und/oder Cu₆Sn₅-Typs bestehen.

7. Verfahren nach Anspruch 1 bis 6, **dadurch gekennzeichnet, dass** Feinstlotpulver mit einem Durchmesser zwischen 2,5 bis 45 µm erzeugt werden.

8. Verfahren nach Anspruch 1 bis 7, **dadurch gekennzeichnet, dass** die Oberfläche der Lotschmelze durch das Scheren auf das 2000 bis 4000fache vergrößert wird.

9. Verfahren nach Anspruch 1 bis 8, **dadurch gekennzeichnet, dass** als Trennöl Rizinusöl eingesetzt wird.

## Claims

1. Method for refining and homogeneously distributing alloy constituents as well as removing undesirable reaction products like oxides and/or slags from lead-free soft solders during the production of finely ground solder powder comprising the following steps:
a) Melting the solder alloy in a vegetable and/or animal oil with high temperature stability, whereby the oil separates the molten mass from the reaction products and/or slags and sets free the latter during the melting,
b) Through buoyancy rising and concentrating the set free reaction products and/or slags in the oil because of density differences between molten mass and reaction products and/or slags,
c) Separating the oil with the reaction products and/or slags by draining the molten mass into a further Florentine receiver with a temperature of at least 20 °C above the liquidus temperature, stirring and multiple shearing treatment of molten mass and oil by means of rotors and stators for producing a disperse system consisting of solder balls and oil and sucking out the oil with the reaction products and/or slags,
d) Stripping the reaction products and/or slags still existing inside the solder melt by enlarging the surface of the solder melt during shearing with a peripheral speed of the rotors of 15.0 to 25 m/s observing a ratio of volumes between melt and oil of 1 : 20 to 1 : 50,
e) Concentrating the reaction products and/or slags stripped from inside the solder melt during shearing in the oil caused by the density differences between reaction products and/or slags and oil,
f) Turbulent mixing of the remaining solder melt and the oil during a circulating period of 10 to 30 minutes to homogeneously distribute the alloy constituents in the solder,
g) Separating the concentrated reaction products and/or slags together with the oil after settling of solder balls.

2. Method according to claim 1, **characterized in that** the lead-free soft solders are Sn-based soft solders consisting of Sn, Ag, Cu, In and lanthanides and reaction products of the lanthanides.

3. Method according to claims 1 or 2, **characterized in that** the lead-free soft solders are Sn-based soft solders consisting of Sn, Ag, In and Nd and reaction products in the form of neodynium oxide and/or intermediate phases of the Ag₃Sn- and Cu₆Sn₅-type.

4. Method according to claim 1, **characterized in that** the lead-free soft solders are Sn-based soft solders consisting of Sn, Ag, Cu and Ni and reaction products in the form of intermediate phases of the Cu₃Sn- and/or Cu₆Sn₅-type.

5. Method according to claim 1, **characterized in that** the lead-free soft solders are Sn-based soft solders consisting of Sn and Ag and reaction products in the form of intermediate phases of the Ag₃Sn-type.

6. Method according to claim 1, **characterized in that** the lead-free soft solders are Sn-based soft solders consisting of Sn and Cu and reaction products in the form of intermediate phases of the Cu₃Sn- and/or Cu₆Sn₃-type.

7. Method according to claims 1 to 6, **characterized in that** finely ground solder powders with diameters between 2,5 and 45 µm are produced.

8. Method according to claims 1 to 7, **characterized in that** the surface of the solder melt by the shearing is enlarged 2000- to 4000-fold.

9. Method according to claims 1 to 8, **characterized in that** as separating oil is used ricinene oil.

## Revendications

1. Procédé pour le raffinage et la répartition homogène de partenaires d'alliage ainsi que l'élimination de produits de réaction non souhaités, tels que des oxydes et/ou des scories de métaux d'apport de brasage tendres exempts de plomb lors de la préparation de poudres fines de métal d'apport de brasage, comprenant les étapes suivantes :
a) fusion de l'alliage de métal d'apport de brasage dans une huile végétale et/ou animale résistant aux températures élevées, où l'huile sépare la masse fondue des produits de réaction et/ou des scories et libère ces derniers lors de la fusion,
b) évacuation et enrichissement des produits de réaction et/ou des scories libérés dans l'huile suite à des différences de densité entre la masse fondue et les produits de réaction et/ou les scories,
c) séparation de l'huile avec les produits de réaction et/ou les scories en évacuant la masse fondue dans un autre collecteur d'huile présentant une température d'au moins 20°C au-dessus de la température de liquidus, par agitation et un traitement par cisaillage multiple de la masse fondue et de l'huile par des rotors et des stators pour la formation d'une dispersion constituée par des billes de métal d'apport de brasage et d'huile et par aspiration de l'huile avec les produits de réaction et/ou les scories,
d) évacuation des produits de réaction et/ou des scories encore présents dans la masse fondue du métal d'apport de brasage par agrandissement de la surface de la masse fondue du métal d'apport de brasage lors du cisaillage à une vitesse périphérique des rotors de 15,0 à 25 m/s en conservant un rapport volumique entre la masse fondue et l'huile de 1:20 à 1:50,
e) enrichissement dans l'huile des produits de réaction et/ou des scories évacués de l'intérieur de la masse fondue du métal d'apport de brasage lors du cisaillement par les différences de densité entre les produits de réaction et/ou les scories et l'huile,
f) mélange turbulent de la masse fondue résiduelle du métal d'apport de brasage et de l'huile pendant un laps de temps de circulation de 10 à 30 minutes pour la répartition homogène des partenaires d'alliage dans le métal d'apport de brasage,
g) séparation des produits de réaction et/ou des scories enrichis ensemble avec l'huile après la sédimentation des billes de métal d'apport de brasage.

2. Procédé selon la revendication 1, **caractérisé en ce que** les métaux d'apport de brasage tendre exempts de plomb sont des métaux d'apport de brasage tendre à base de Sn qui sont constitués de Sn, d'Ag, de Cu, d'In et de lanthanides ainsi que de produits de réaction des lanthanides.

3. Procédé selon la revendication 1 ou 2, **caractérisé en ce que** les métaux d'apport de brasage tendre exempts de plomb sont des métaux d'apport de brasage tendre à base de Sn, qui sont constitués de Sn, d'Ag, d'In et de Nd ainsi que de produits de réaction sous forme d'oxyde de néodyme et/ou sous forme de phases intermétalliques du type Ag₃Sn et Cu₆Sn₅.

4. Procédé selon la revendication 1, **caractérisé en ce que** les métaux d'apport de brasage tendre exempts de plomb sont des métaux d'apport de brasage tendre à base de Sn, qui sont constitués de Sn, d'Ag, de Cu et de Ni ainsi que de produits de réaction sous forme de phases Intermétalliques du type Cu₃Sn et/ou Cu₆Sn₆.

5. Procédé selon la revendication 1, **caractérisé en ce que** les métaux d'apport de brasage tendre exempts de plomb sont des métaux d'apport de brasage tendre à base de Sn, qui sont constitués de Sn et d'Ag ainsi que de produits de réaction sous forme de phases intermétalliques du type Ag₃Sn.

6. Procédé selon la revendication 1, **caractérisé en ce que** les métaux d'apport de brasage tendre exempts de plomb sont des métaux d'apport de brasage tendre à base de Sn, qui sont constitués de Sn, et de Cu ainsi que de produits de réaction sous forme de phases intermétalliques du type Cu₃Sn et/ou Cu₆Sn₅.

7. Procédé selon la revendication 1 à 6, **caractérisé en ce qu'**on obtient des poudres fines de métal d'apport de brasage présentant un diamètre entre 2,5 à 45 µm.

8. Procédé selon la revendication 1 à 7, **caractérisé en ce que** la surface de la masse fondue du métal d'apport de brasage est agrandie 2000 à 4000 fois par le cisaillage.

9. Procédé selon la revendication 1 à 8, **caractérisé en ce qu'**on utilise de l'huile de ricin comme huile de séparation.
